# FASCICULE DE BREVET EUROPEEN

(11) **EP 3 488 923 B1**
(45) Date de publication et mention de la délivrance du brevet: **08.12.2021**
(21) Numéro de dépôt: 18208618.1
(22) Date de dépôt: 27.11.2018
(51) Int. Cl.: B01J 19/24, B01J 4/00

(54) **ENCEINTE DE CONDITIONNEMENT D'UN CATALYSEUR POUR UN CANAL RÉACTIF DE RÉACTEUR ÉCHANGEUR**
VERPACKUNGSGEHÄUSE EINES KATALYSATORS FÜR EINEN REAKTIVEN KANAL EINES REAKTOR-WÄRMETAUSCHERS
PACKAGING ENCLOSURE OF A CATALYST FOR A REAGENT CHANNEL OF AN EXCHANGER REACTOR

(30) Priorité: 28.11.2017 FR 1761272
(43) Date de publication de la demande: 29.05.2019
(73) Titulaire: Commissariat à l'énergie atomique et aux énergies alternatives, 75015 Paris (FR)
(72) Inventeur: MORO-LE GALL, Isabelle, 38600 FONTAINE (FR); BENGAOUER, Alain, 38920 CROLLES (FR)
(74) Mandataire: Brevalex

(56) Documents cités:
- WO-A1-2006/021822
- WO-A2-2013/001275
- WO-A2-2015/121611
- US-A- 5 776 421

## Description

### DOMAINE TECHNIQUE

La présente invention se rapporte au domaine général des réacteurs échangeurs destinés à la mise en œuvre de réactions catalytiques endothermiques ou exothermiques.

L'invention trouve de nombreuses applications dans tous types de procédés mettant en œuvre des réactions catalytiques endothermiques ou exothermiques, et notamment fortement endothermiques ou exothermiques, particulièrement du type solide-gaz. De tels procédés peuvent par exemple utiliser un catalyseur solide, notamment sous forme de poudre.

Ces procédés peuvent notamment comprendre des procédés de synthèse de carburants et de combustibles, par exemple des combustibles liquides, tels que le méthanol (MeOH), ou gazeux, tels que le méthane ou substitut de gaz naturel (SNG pour « Synthetic Natural Gas » en anglais) ou le diméthyléther (DME), obtenus à partir d'hydrogène et d'oxydes de carbone ou à partir de gaz de synthèse comprenant un mélange d'hydrogène et d'oxydes de carbone.

L'invention peut ainsi être tout particulièrement appliquée à toutes les situations où la maîtrise de la température est un point crucial, notamment à des réactions très endothermiques ou très exothermiques, catalytiques ou non catalytiques, telles que celle de méthanation du monoxyde ou du dioxyde de carbone en présence d'hydrogène. En effet, le problème de la gestion thermique de ces réactions, notamment celles fortement exothermiques de méthanation du monoxyde ou du dioxyde de carbone en présence d'hydrogène, est crucial car l'évolution de la température dans le réacteur échangeur conditionne le taux de conversion et la sélectivité vers le méthane de la réaction, ainsi que la stabilité dans le temps des performances du catalyseur. De plus, ces réactions sont thermodynamiquement favorisées par des pressions élevées.

De façon générale, l'invention trouve une application dans tout type de réacteur échangeur dans lequel intervient un catalyseur, ou toute autre particule nécessaire à la réalisation de la réaction chimique, lorsque l'on souhaite que le catalyseur soit isolé de l'atmosphère externe ou ambiante pour des raisons liées à la sécurité des personnes, et qu'il soit conditionné en volumes finis pour une utilisation plus pratique.

L'invention propose ainsi une enceinte de conditionnement d'un catalyseur pour son utilisation dans un canal réactif d'un réacteur échangeur, un réacteur échangeur comportant une telle enceinte, ainsi qu'un procédé de remplissage d'une telle enceinte.

### ÉTAT DE LA TECHNIQUE ANTÉRIEURE

Le problème de la gestion thermique des réactions citées auparavant peut tout particulièrement être lié à la nature du catalyseur utilisé pour effectuer la réaction chimique ainsi qu'à la qualité de remplissage en catalyseur des canaux réactifs du réacteur échangeur utilisé pour le procédé de synthèse, à savoir les canaux dans lesquels les gaz de réaction, i.e. les réactifs, circulent et dans lesquels le catalyseur est présent. En effet, si la densité de catalyseur, ou la taille des particules, diffère sensiblement entre les différents canaux réactifs, des instabilités thermiques peuvent apparaître et conduire à une dégradation accélérée du catalyseur, et donc à une baisse du rendement de conversion.

En outre, il est à noter qu'à l'heure actuelle les catalyseurs utilisés et développés pour la synthèse de méthane à partir d'hydrogène et de monoxyde de carbone sont notamment composés de matériaux de type CMR (Cancérigènes Mutagènes et Reprotoxiques). Aussi, le remplissage et la manipulation de ces catalyseurs doit pouvoir se faire, pour la sécurité des opérateurs, sous hotte aspirante ou toutes autres conditions assurant que personne n'inhale de particules de catalyseur.

Par ailleurs, lors de l'utilisation du réacteur échangeur, le catalyseur vieilli. Suite à un historique thermique particulier, ou tout simplement lorsque sa durée d'utilisation devient importante, le rendement du réacteur échangeur chute du fait d'une désactivation du catalyseur et il peut devenir nécessaire de le changer. Cependant, étant donné sa nature CMR et l'importance cruciale de la qualité et de la reproductibilité du remplissage, il n'est pas possible de réaliser cette opération de changement sans démonter et déplacer le réacteur échangeur de l'installation du site de production et l'emmener dans un endroit approprié où l'opération de vidange et de remplissage en catalyseur neuf pourra se faire dans des conditions optimales, à savoir des conditions sécuritaires pour les opérateurs et garantissant une reproductibilité et une qualité de remplissage des canaux réactifs en catalyseur.

Enfin, le retour d'expérience montre que l'essentiel de la réaction chimique a lieu sur les quelques premiers centimètres des canaux réactifs où se situe donc le pic maximal en température. Il en résulte que, de trop hautes températures pouvant dégrader le catalyseur rapidement, celui-ci peut avoir besoin d'être remplacé seulement sur les quelques premiers centimètres des canaux réactifs, alors que le reste du catalyseur peut encore être utilisable. Or, la maîtrise d'un changement partiel de catalyseur n'est actuellement pas connue de sorte que l'opération classique consiste à vider entièrement les canaux réactifs pour les remplir de nouveau en catalyseur neuf.

Les réacteurs échangeurs catalytiques font l'objet de nombreuses réalisations industrielles. Cependant, leur caractère polyphasique, à savoir une ou plusieurs phases réactives et une phase catalytique, rend leur dimensionnement difficile lorsqu'il s'agit de garantir un taux de conversion maximal, une bonne sélectivité dans des conditions d'utilisation variables et lorsque le catalyseur se désactive au cours du temps.

Dans la présente invention, on s'intéresse aux réacteurs échangeurs dans lesquels la réaction chimique, notamment exothermique, a lieu au sein d'un canal réactif refroidi continûment par un fluide caloporteur. La plupart de ces réacteurs sont de type tube-calandre, la réaction chimique se produisant dans les tubes réactionnels refroidis en périphérie par un bain de fluide caloporteur, par analogie aux échangeurs de chaleur à plaques, les canaux réactifs comme les canaux de refroidissement ou caloporteurs pouvant être constitués d'un canal gravé dans une plaque ou constitués par l'espace laissé entre deux plaques. Selon la technologie choisie pour le refroidissement, ces réacteurs échangeurs peuvent être isothermes ou anisothermes.

Le catalyseur présent dans le canal réactif a pour objectif, comme tout catalyseur, de favoriser la réaction chimique souhaitée, notamment la synthèse de méthane à partir d'hydrogène et de monoxyde de carbone.

Il existe de nombreux catalyseurs pour permettre cette synthèse, et leur optimisation est continuelle, que ce soit en termes de composition chimique, de granulométrie, ou encore de conditions opérationnelles optimales, entre autres.

A l'heure actuelle, des essais de synthèse de méthane par l'intermédiaire d'un réacteur échangeur à plaques compact, avec utilisation de catalyseurs adaptés et une granulométrie comprise entre 200 µm et 300 µm, ont montré qu'il est possible d'obtenir des rendements de conversion de plus de 90 % avec des températures de fluide caloporteur comprises entre 250°C et 300°C et des pressions de gaz comprises entre 2 bars et 3 bars.

Cependant, dans certaines conditions, on observe un emballement thermique qui se traduit par un pic de température, au moins supérieur à 400°C, dans le lit de catalyseur des canaux réactifs qui provoque sa désactivation. Toutefois, même dans des conditions hors emballement thermique, il a été observé une perte d'activité du catalyseur sur de courtes durées, typiquement une vingtaine d'heures, qui se traduit concrètement par une baisse du rendement de conversion en méthane. Bien que cette baisse puisse temporairement être rattrapée par une augmentation des conditions de fonctionnement du réacteur échangeur, notamment une hausse de température et de pression des gaz, cette solution n'est pas pérenne.

La réalisation de plusieurs essais successifs, dans des conditions opératoires identiques, à savoir mêmes conditions de pression et de température du fluide caloporteur et du gaz en entrée, ainsi que même lot de catalyseur, mais avec pour seule différence entre les essais une vidange et un nouveau remplissage des canaux réactifs en catalyseur neuf, a montré qu'il existe une influence du remplissage sur le rendement du réacteur échangeur.

Cette opération de remplissage est généralement entièrement manuelle. Etant donné la nature fortement CMR des catalyseurs utilisés, les opérations de remplissage sont lourdes pour les opérateurs qui se doivent de porter leurs EPI (Equipements de Protection Individuelle) et également de travailler sous hotte aspirante et filtrante. Si cela ne pose que peu de problème sur des réacteurs échangeurs de faibles masses, la tendance actuelle va à la fabrication de réacteurs échangeurs plus imposants, et donc difficilement maniables, pour lesquels ces opérations de remplissage posent de vrais problèmes pratiques. Il est donc forcément difficile d'envisager à long terme, sur site de production, la réalisation aisée d'un changement du catalyseur lorsque celui-ci viendra à être désactivé.

A l'heure actuelle, la technique de remplissage des canaux réactifs est donc peu adaptée. Elle est contraignante de mise en œuvre, manuelle, non reproductible et peu aisée car elle nécessite la mise en place de sécurités dues à la nature CMR des catalyseurs, et elle implique le changement complet du catalyseur alors même que seule une partie de celui-ci peut nécessiter d'être remplacée. De plus, une telle opération sous-entend le déplacement hors site de production du réacteur échangeur.

### EXPOSÉ DE L'INVENTION

L'invention a donc pour but de remédier au moins partiellement aux besoins mentionnés précédemment et aux inconvénients relatifs aux réalisations de l'art antérieur.

L'invention correspond à l'objet des revendications.

L'invention a ainsi pour objet, selon l'un de ses aspects, une enceinte de conditionnement d'un catalyseur configurée pour être insérée dans un canal réactif de réacteur échangeur destiné à la mise en oeuvre de réactions catalytiques endothermiques ou exothermiques, comportant :
- une partie principale de contenance du catalyseur, comportant un logement interne pour recevoir le catalyseur, ledit logement étant ouvert à au moins deux extrémités opposées dudit logement,
- deux éléments de fermeture dudit logement, respectivement positionnés à chacune desdites au moins deux extrémités opposées dudit logement pour confiner le catalyseur à l'intérieur dudit logement, les éléments de fermeture étant poreux pour permettre le passage de gaz réactifs au travers des éléments de fermeture.

La demande internationale WO 2015/121611 A2 divulgue un réacteur tubulaire pour la mise en oeuvre d'une réaction chimique avec des première et deuxième zones de réaction. La demande internationale WO 2006/021822 A1 décrit un réacteur de type cartouche pour un appareil d'hydrogénation. La demande internationale WO 2013/001275 A2 décrit un appareil d'insertion automatique de catalyseur dans un réacteur multi-canaux.

Dans toute la description, il est noté que l'enceinte de conditionnement de catalyseur peut également être désignée par l'appellation de « cartouche de conditionnement de catalyseur» ou tout simplement « cartouche ». De façon avantageuse, une telle enceinte ou cartouche de conditionnement permet un confinement de catalyseur, en quantité variable, pour son utilisation dans un réacteur échangeur.

Grâce à l'invention, il peut être possible d'obtenir une solution de conditionnement de catalyseur permettant de surmonter bon nombre des inconvénients précédemment mentionnés relativement au remplissage des réacteurs échangeurs en catalyseur.

En particulier, seules des quantités raisonnables de catalyseur ont besoin d'être manipulées pour être conditionnées, et cela en dehors du réacteur échangeur. Le remplissage d'un réacteur échangeur massif, par exemple de plusieurs centaines de kilogrammes, n'est dès lors pas plus que compliqué que celui d'un réacteur échangeur de petite taille et ne nécessite pas la mise en place d'infrastructures lourdes et/ou spécifiques.

De plus, le conditionnement peut être réalisé en un lieu dédié, par des opérateurs adéquats et compétents, dans des conditions sécuritaires, pour que les enceintes soient ensuite insérées dans les canaux réactifs d'un réacteur échangeur directement sur le site de production où il ne sera pas nécessaire de disposer de dispositif de sécurité particulier, ni de personnel portant des EPI afin de se protéger des matériaux de type CMR. L'invention présente donc un intérêt concret et direct pour l'utilisateur final du réacteur échangeur.

En outre, lorsque le rendement du réacteur échangeur présente une baisse considérée comme significative, il devient alors possible de changer seulement une partie du catalyseur, en particulier la ou les enceintes ou cartouches situées en entrée du réacteur échangeur, ce qui permet de limiter les coûts. De plus, il n'est alors pas nécessaire de déplacer le réacteur échangeur hors du site de production pour réaliser la vidange et le remplissage en catalyseur neuf. Il suffit au contraire de démonter le réacteur échangeur, de sortir la ou les quelques enceintes à changer, de les remplacer, et de remettre le réacteur échangeur en place dans son système d'utilisation. Le réacteur échangeur n'a donc plus besoin d'être sorti du site de production pour un remplacement du catalyseur qui, grâce à l'invention, peut être partiel.

Le réacteur échangeur selon l'invention peut en outre comporter l'une ou plusieurs des caractéristiques suivantes prises isolément ou suivant toutes combinaisons techniques possibles.

Les éléments de fermeture sont préférentiellement constitués de frittés, notamment réalisés en acier, par exemple en acier de type 316L.

De plus, la partie principale est de section rectangulaire et peut comporter un logement de section rectangulaire ouvert sur deux côtés opposés, lesquels peuvent être fermés par les éléments de fermeture sous forme de plaques rectangulaires.

La partie principale est préférentiellement réalisée en acier, notamment en acier de type 316L.

En variante, la partie principale peut comporter du cuivre, étant notamment réalisée en cuivre ou alliage de cuivre, ou bien encore en acier avec une surface recouverte d'un dépôt de cuivre.

Par ailleurs, l'invention a encore pour objet, selon un autre de ses aspects, un réacteur échangeur, destiné à la mise en œuvre de réactions catalytiques endothermiques ou exothermiques, comportant :
- un corps de réacteur,
- un circuit réactif comprenant une pluralité de canaux réactifs comprenant un catalyseur,
- un circuit de fluide caloporteur pour refroidir les canaux réactifs, comprenant une pluralité de canaux de refroidissement,
caractérisé en ce qu'il comporte en outre au moins une enceinte de conditionnement telle que définie précédemment, ladite au moins une enceinte étant insérée dans au moins un canal réactif du réacteur échangeur.

Ladite au moins une enceinte est préférentiellement au contact de la paroi interne dudit au moins un canal réactif, les hauteurs et largeurs de ladite au moins une enceinte et dudit au moins un canal réactif étant notamment sensiblement identiques.

De plus, le réacteur échangeur comporte au moins un canal réactif dans lequel une pluralité d'enceintes est insérée les unes à la suite des autres, lesdites enceintes étant notamment au contact les unes des autres par le biais de leurs éléments de fermeture.

### BRÈVE DESCRIPTION DES DESSINS

L'invention pourra être mieux comprise à la lecture de la description détaillée qui va suivre, d'un exemple de mise en œuvre non limitatif de celle-ci, ainsi qu'à l'examen des figures, schématiques et partielles, du dessin annexé, sur lequel :
- la figure 1 représente, en perspective, un exemple d'enceinte de conditionnement de catalyseur conforme à l'invention,
- la figure 2 représente, en perspective et en coupe, l'enceinte de conditionnement de catalyseur de la figure 1,
- la figure 3 représente, en perspective, la partie principale de l'enceinte de conditionnement de catalyseur de la figure 1,
- la figure 4 représente, en perspective, un élément de fermeture de l'enceinte de conditionnement de catalyseur de la figure 1,
- la figure 5 représente, en perspective, un exemple de réacteur échangeur comportant quatre canaux réactifs dans chacun desquels sont insérées dix enceintes de conditionnement de catalyseur telles que celle représentée sur la figure 1,
- la figure 6 représente, en perspective et en coupe, le réacteur échangeur de la figure 5, et
- la figure 7 est une vue agrandie selon A de la figure 6.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

La présente invention vise à permettre un conditionnement du catalyseur C d'un réacteur échangeur 10 permettant de le confiner dans des enceintes ou cartouches de conditionnement permettant une manipulation plus aisée et sécuritaire et une facilité de remplacement du catalyseur C.

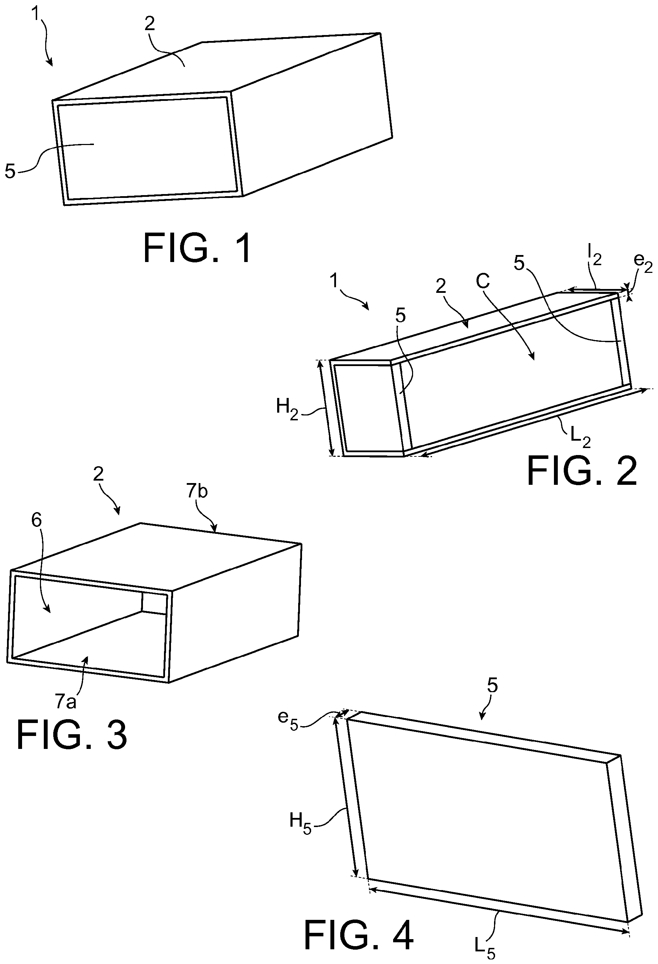

Dans l'exemple décrit en référence aux figures 1 à 7, le réacteur échangeur 10 est un réacteur échangeur à plaques, présentant en particulier des canaux réactifs 3 et des canaux de refroidissement 4 de section rectangulaire. En effet, de façon générale, un tel réacteur échangeur est constitué d'une superposition de canaux appelés « canaux réactifs », qui sont ceux dans lesquels les gaz réactifs circulent, dans lesquels le catalyseur est présent et dans lesquels la réaction généralement exothermique se déroule, avec des canaux dits « canaux de refroidissement » ou « canaux caloporteurs », qui sont ceux dans lesquels le fluide caloporteur circule afin de limiter la montée en température dans les canaux réactifs. Ce type de réacteur échangeur est obtenu par empilement de plaques usinées et assemblées par un procédé de soudage diffusion ou encore Compaction Isostatique à Chaud (CIC).

Toutefois, la présente invention n'est pas limitée à ce type de réacteur échangeur, en particulier que ce soit en termes de géométrie ou de mode de fabrication. Ainsi, par exemple, l'invention peut être appliquée à un réacteur échangeur tubulaire. Dans ce cas, la section de la partie principale 2 de l'enceinte 1 pourrait être adaptée pour que la partie principale 2 présente par exemple une forme cylindrique.

De plus, il est à noter que, dans la description d'un exemple préféré de l'invention qui va suivre, la forme, le nombre, les dimensions et les matériaux indiqués peuvent être modifiés et les choix proposés pour cet exemple ne sont bien entendu aucunement limitatifs.

En référence aux figures 1 à 4, on va maintenant décrire un exemple de réalisation privilégié d'une enceinte 1 de conditionnement de catalyseur conforme à l'invention.

Comme on peut le voir sur la figure 1, l'enceinte, ou encore appelée par la suite cartouche 1, comporte une partie principale 2 sous la forme d'une enveloppe de contenance du catalyseur C et deux éléments de fermeture 5 sous la forme de plaques de fermeture.

Comme visible sur la figure 3, l'enveloppe 2 comporte un logement interne 6 pour recevoir le catalyseur C. L'enveloppe 2 et son logement 6 présentent ici une section rectangulaire. La longueur L₂ de l'enveloppe 2 est par exemple de l'ordre de 18 mm, sa largeur l₂ est par exemple de l'ordre de 10 mm et sa hauteur H₂ est par exemple de l'ordre de 5 mm. L'épaisseur e₂ de l'enveloppe 2 est par exemple de l'ordre de 0,3 mm.

L'enveloppe 2 est préférentiellement réalisée en acier, notamment de type 316L. Toutefois, d'autres matériaux peuvent être prévus afin d'optimiser la tenue mécanique et/ou le contact thermique entre la surface externe de l'enveloppe 2 et le réacteur échangeur 10 dans lequel les cartouches 1 seront insérées. A titres d'exemples, l'enveloppe 2 pourrait être réalisée en cuivre ou alliage de cuivre pour favoriser l'évacuation de la chaleur issue de la réaction exothermique, notamment celle de synthèse du méthane. L'enveloppe 2 pourrait également être réalisée en acier avec une surface recouverte d'un dépôt de cuivre afin d'allier la tenue mécanique élevée procurée par l'acier à la bonne conductivité thermique fournie par le cuivre.

Par ailleurs, l'enveloppe 2 peut être fabriquée de diverses manières, par exemple par emboutissage, par pliage, par usinage, entre autres.

Comme on peut le voir sur la figure 3, le logement 6 est ouvert sur ses deux extrémités opposées 7a et 7b de largeur l₂.

Les deux plaques de fermetures 5 sont semblables à celle représentée sur la figure 4. Elles permettent de fermer le logement 6 en étant solidarisées au niveau des extrémités 7a et 7b. La longueur L₅ d'une plaque de fermeture 5 est par exemple de l'ordre de 9,4 mm et sa hauteur H₅ est par exemple de l'ordre de 4,4 mm. L'épaisseur es d'une plaque de fermeture 5 est par exemple de l'ordre de 0,4 mm.

Conformément à l'invention, ces plaques de fermeture 5 sont poreuses pour pouvoir laisser passer les gaz réactifs une fois en place dans le réacteur échangeur 10.

De façon préférentielle, les plaques de fermeture 5 sont formées par des frittés. Ces plaques de fermeture 5 sont de plus préférentiellement réalisées en acier, notamment de type 316L. Ces plaques de fermeture 5 ont principalement deux objectifs : d'une part, elles doivent contenir le catalyseur C, composé généralement de matériaux CMR, dans le milieu confiné de la cartouche 1 et ainsi assurer la sécurité des opérateurs chargés de la mise en place des cartouches 1 sur le site d'exploitation du réacteur échangeur; d'autre part, elles doivent permettre le passage des gaz réactifs, notamment du dihydrogène et du monoxyde de carbone, nécessaire à la synthèse du combustible, notamment du méthane. Ainsi, les plaques de fermeture 5 ont deux finalités antinomiques. Il est ainsi nécessaire de choisir comme matériau pour les plaques de fermeture 5, un matériau dont la porosité est suffisamment fine pour confiner le catalyseur C mais permettant toutefois la circulation des gaz réactifs. Ici, le choix a été fait de prendre de l'acier de type 316L mais tout matériau susceptible de répondre à ces exigences est utilisable dans la présente invention. En définitif, les dimensions des porosités des plaques de fermeture 5 doivent être adaptées à la granulométrie du catalyseur C. Une connaissance fine de la variation de la granulométrie dans le lot du catalyseur permettrait donc de choisir convenablement les caractéristiques des plaques de fermeture 5.

Afin d'effectuer le remplissage de la cartouche 1 en catalyseur C, la première plaque de fermeture 5 est mise en place au niveau de l'extrémité 7a du logement 6. La solidarisation peut être effectuée par différents moyens mécaniques tels que par poinçonnage, soudage, usinage, enfonçage, entre autres.

Puis, la cartouche 1 est remplie en catalyseur C dans le logement 6. Le volume interne du logement 6 est généralement faible, par exemple de l'ordre de quelques centaines de mm³. De ce fait, il est aisé de pouvoir travailler sous hotte aspirante ou toute autre condition permettant la manipulation sécuritaire des matériaux CMR formés par les catalyseurs, et également de pouvoir manier l'ensemble.

Alors, la deuxième plaque de fermeture 5 est mise en place au niveau de l'extrémité 7b du logement 6. La solidarisation peut là aussi être effectuée par différents moyens mécaniques tels que par poinçonnage, soudage, usinage, enfonçage, entre autres. Cela permet d'isoler le catalyseur de l'atmosphère ambiante.

On obtient alors la cartouche 1 contenant un volume élémentaire de catalyseur C, destinée à être insérée dans un réacteur échangeur 10.

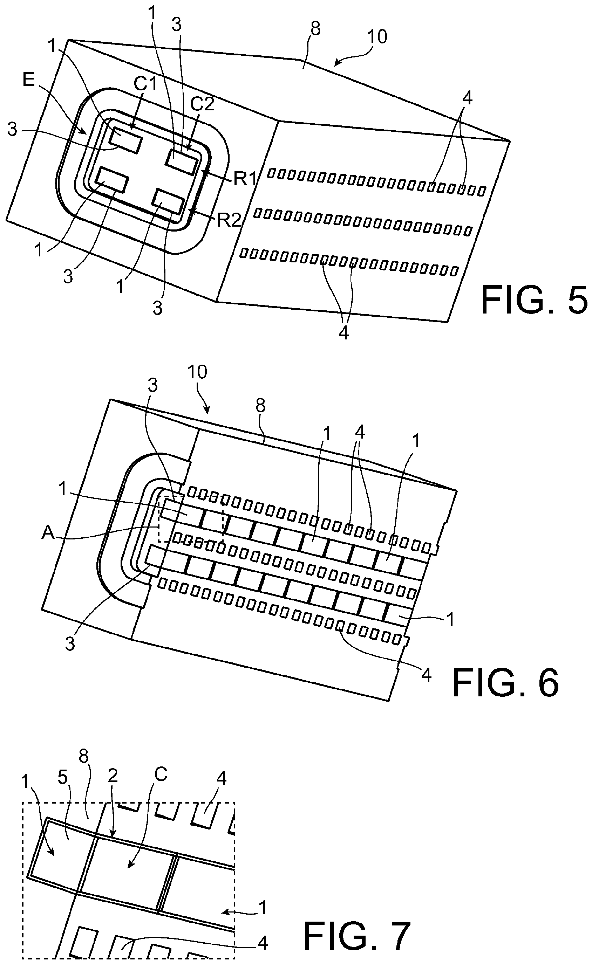

Les figures 5 à 7 permettent d'illustrer l'insertion d'une pluralité de cartouches 1 dans des canaux réactifs 3 d'un tel réacteur échangeur 10.

Ce réacteur échangeur 10 est donc tout particulièrement destiné à la mise en œuvre de réactions catalytiques endothermiques ou exothermiques.

Comme on peut le voir sur la figure 5, il comporte un corps de réacteur 8 sous la forme d'un bloc, dans lequel sont situés un circuit réactif comprenant une pluralité de canaux réactifs 3 et un circuit de fluide caloporteur pour refroidir les canaux réactifs 3, comprenant une pluralité de canaux de refroidissement 4. Les canaux de refroidissement 4 sont orientés de façon transverse par rapport aux canaux réactifs 3. Le nombre, les dimensions et les longueurs des canaux réactifs 3 et des canaux de refroidissement 4 dépendent des applications visées pour le réacteur échangeur 10. Ainsi, sur cette figure 5, le réacteur échangeur 10 comporte une première rangée R1 de deux canaux réactifs 3 et une deuxième rangée R2 de deux canaux réactifs 3, superposées entre elles de sorte à former deux colonnes C1 et C2 de chacune deux canaux réactifs 3.

Dans cet exemple de réacteur échangeur 10, chaque canal réactif 3 comporte un ensemble de cartouches 1 adjacentes les unes des autres, toutes au contact de la paroi interne du canal réactif 3.

Il est à noter que les dimensions données pour les cartouches 1 ne sont aucunement limitatives. Dans cet exemple, chaque canal réactif 3 présente une longueur d'environ 216 mm de sorte que douze cartouches 1 sont insérées. Toutefois, la longueur des cartouches 1 est à optimiser en fonction de la longueur des canaux réactifs 3 et de la distance sur laquelle le catalyseur C est susceptible de se désactiver à partir de l'entrée E du réacteur échangeur 10. En effet, comme expliqué auparavant, la réaction chimique est forte en entrée de réacteur et se traduit par un pic de température susceptible de dégrader le catalyseur C plus rapidement qu'ailleurs. La longueur typique de vieillissement prématuré du catalyseur C le long du canal réactif 3 peut donc être évaluée afin de réaliser des cartouches 1 ayant une longueur de cet ordre. Ainsi, lors du changement de cartouches 1, seul le strict minimum de catalyseur nécessaire pourrait être remplacé.

## Revendications

1. Réacteur échangeur (10) à plaques, destiné à la mise en œuvre de réactions catalytiques endothermiques ou exothermiques, comportant :
- un corps de réacteur (8),
- un circuit réactif comprenant une pluralité de canaux réactifs (3) de section rectangulaire comprenant un catalyseur (C),
- un circuit de fluide caloporteur pour refroidir les canaux réactifs (3), comprenant une pluralité de canaux de refroidissement (4) de section rectangulaire, les canaux de refroidissement (4) étant orientés de façon transverse par rapport aux canaux réactifs (3),
**caractérisé en ce qu'**il comporte en outre une pluralité d'enceintes (1) de conditionnement d'un catalyseur (C), insérées les unes à la suite des autres dans au moins un canal réactif (3) du réacteur échangeur (10), chaque enceinte (1) comportant :
- une partie principale (2) de contenance du catalyseur, comportant un logement interne (6) pour recevoir le catalyseur, ledit logement (6) étant ouvert à au moins deux extrémités opposées (7a, 7b) dudit logement (6),
- deux éléments de fermeture (5) dudit logement (6), respectivement positionnés à chacune desdites au moins deux extrémités opposées (7a, 7b) dudit logement (6) pour confiner le catalyseur à l'intérieur dudit logement (6), les éléments de fermeture (5) étant poreux pour permettre le passage de gaz réactifs au travers des éléments de fermeture (5),
lesdites enceintes (1) étant au contact les unes des autres par le biais de leurs éléments de fermeture (5),
la partie principale (2) étant de section rectangulaire et comportant ledit logement (6) de section rectangulaire ouvert sur deux côtés opposés (7a, 7b), lesquels sont fermés par les éléments de fermeture (5) sous forme de plaques rectangulaires.

2. Réacteur selon la revendication 1, **caractérisé en ce que** les éléments de fermeture (5) sont constitués de frittés, notamment réalisés en acier, par exemple en acier de type 316L.

3. Réacteur selon l'une des revendications précédentes, **caractérisé en ce que** la partie principale (2) est réalisée en acier, notamment en acier de type 316L.

4. Réacteur selon la revendication 1 ou 2, **caractérisé en ce que** la partie principale (2) comporte du cuivre, étant notamment réalisée en cuivre ou alliage de cuivre, ou bien encore en acier avec une surface recouverte d'un dépôt de cuivre.

5. Réacteur échangeur selon l'une quelconque des revendications précédentes, **caractérisé en ce que** chaque enceinte (1) est au contact de la paroi interne dudit au moins un canal réactif (3), les hauteurs et largeurs de chaque enceinte (1) et dudit au moins un canal réactif (3) étant notamment sensiblement identiques.

## Patentansprüche

1. Austauschreaktor (10) mit Platten zur Durchführung von endothermen oder exothermen katalytischen Reaktionen, enthaltend:
- einen Reaktorkörper (8),
- einen Reaktionskreislauf mit einer Vielzahl von Reaktionskanälen (3) mit rechteckigem Querschnitt, die einen Katalysator (C) aufweisen,
- einen Wärmeträgerfluidkreislauf zur Kühlung der Reaktionskanäle (3), der eine Vielzahl von Kühlkanälen (4) mit rechteckigem Querschnitt aufweist, wobei die Kühlkanäle (4) quer zu den Reaktionskanälen (3) ausgerichtet sind,
**dadurch gekennzeichnet, dass** er ferner eine Vielzahl von Kammern (1) zum Umschließen eines Katalysators (C) aufweist, die nacheinander in mindestens einen Reaktionskanal (3) des Austauschreaktors (10) eingesetzt sind, wobei jede Kammer (1) enthält:
- einen Hauptabschnitt (2) zum Aufnehmen des Katalysators, der eine innere Aufnahme (6) zum Aufnehmen des Katalysators aufweist, wobei die Aufnahme (6) an mindestens zwei gegenüberliegenden Enden (7a, 7b) der Aufnahme (6) offen ist,
- zwei Verschlusselemente (5) für die Aufnahme (6), die an den jeweiligen mindestens zwei gegenüberliegenden Enden (7a, 7b) der Aufnahme (6) angeordnet sind, um den Katalysator innerhalb der Aufnahme (6) einzuschließen, wobei die Verschlusselemente (5) porös ausgebildet sind, um den Durchgang von reaktiven Gasen durch die Verschlusselemente (5) zu ermöglichen,
wobei die Kammern (1) über ihre Verschlusselemente (5) miteinander in Kontakt stehen,
wobei der Hauptabschnitt (2) einen rechteckigen Querschnitt hat und die Aufnahme (6) mit rechteckigem Querschnitt aufweist, die an zwei gegenüberliegenden Seiten (7a, 7b) offen ist, welche durch die Verschlusselemente (5) in Form von rechteckigen Platten verschlossen sind.

2. Reaktor nach Anspruch 1, **dadurch gekennzeichnet, dass** die Verschlusselemente (5) aus gesintertem Material bestehen und insbesondere aus Stahl, beispielsweise aus Stahl des Typs 316L, hergestellt sind.

3. Reaktor nach einem der vorhergehenden Ansprüche, **dadurch gekennzeichnet, dass** der Hauptabschnitt (2) aus Stahl, insbesondere aus Stahl des Typs 316L, hergestellt ist.

4. Reaktor nach Anspruch 1 oder 2, **dadurch gekennzeichnet, dass** der Hauptabschnitt (2) Kupfer enthält und insbesondere aus Kupfer oder einer Kupferlegierung oder auch aus Stahl mit einer mit einer Kupferabscheidung beschichteten Oberfläche, hergestellt ist.

5. Austauschreaktor nach einem der vorhergehenden Ansprüche, **dadurch gekennzeichnet, dass** jede Kammer (1) in Kontakt mit der Innenwand des mindestens einen Reaktionskanals (3) steht, wobei die Höhen und Breiten jeder Kammer (1) und des mindestens einen Reaktionskanals (3) insbesondere im Wesentlichen identisch sind.

## Claims

1. A plate exchanger reactor (10), for implementing endothermic or exothermic catalytic reactions, including:
- a reactor body (8),
- a reactive circuit comprising a plurality of reactive channels (3) with a rectangular cross-section comprising a catalyst (C),
- a coolant circuit to cool the reactive channels (3), comprising a plurality of cooling channels (4) with a rectangular cross-section, the cooling channels (4) being oriented transversally relative to the reactive channels (3),
**characterised in that** it further includes a plurality of enclosures (1) for conditioning a catalyst (C), inserted one after the other into at least one reactive channel (3) of the exchanger reactor (10), each enclosure (1) including:
- a main part (2) for containing the catalyst, including an inner housing (6) to receive the catalyst, said housing (6) being open at at least two opposite ends (7a, 7b) of said housing (6),
- two closure elements (5) of said housing (6), respectively positioned at each of said at least two opposite ends (7a, 7b) of said housing (6) to confine the catalyst inside said housing (6), the closure elements (5) being porous to allow reactive gases to pass through the closure elements (5),
said enclosures (1) being in contact with each other through their closure elements' (5),
the main part (2) being with a rectangular cross-section and including said housing (6) with a rectangular cross-section open onto two opposite sides (7a, 7b), which are closed by the closure elements (5) as rectangular plates.

2. The reactor according to claim 1, **characterised in that** the closure elements (5) consist of frits, especially made of steel, for example of 316L type steel.

3. The reactor according to one of the previous claims, **characterised in that** the main part (2) is made of steel, especially of 316L type steel.

4. The reactor according to claim 1 or 2, **characterised in that** the main part (2) includes copper, being especially made of copper or a copper alloy, or even of steel with a surface covered with a copper deposit.

5. The exchanger reactor according to any of the previous claims, **characterised in that** each enclosure (1) is in contact with the inner wall of said at least one reactive channel (3), the heights and widths of each enclosure (1) and of said at least one reactive channel (3) being especially substantially identical to each other.
